Europäisches Patentamt

European Patent Office

Office européen des brevets

(11) Veröffentlichungsnummer : **0 015 475**
**B1**

(12) **EUROPÄISCHE PATENTSCHRIFT**

(45) Veröffentlichungstag der Patentschrift :
09.06.82

(51) Int. Cl.³ : **G 01 N 23/207**

(21) Anmeldenummer : **80100931.7**

(22) Anmeldetag : **25.02.80**

(54) Röntgendiffraktometer mit hoher zeitlicher Auflösung.

(30) Priorität : 01.03.79 DE 2907948

(43) Veröffentlichungstag der Anmeldung :
17.09.80 (Patentblatt 80/19)

(45) Bekanntmachung des Hinweises auf die Patenterteilung : 09.06.82 Patentblatt 82/23

(84) Benannte Vertragsstaaten :
**BE CH FR GB NL**

(56) Entgegenhaltungen :
**DE - A - 2 637 945**

**JOURNAL OF PHYSICS E SCIENTIFIC INSTRUMENTS, Band 10, Nr. 3, März 1977, Seiten 222-225 London, G.B.
D.J. DYSON et al. : « An automatic data collection system for powder diffractometry » Seite 225**

(73) Patentinhaber : **SIEMENS AKTIENGESELLSCHAFT
Berlin und München
Postfach 22 02 61
D-8000 München 22 (DE)**

(72) Erfinder : **Göbel, Herbert, Dr.
Goldschaggbogen 8
D-8000 München 83 (DE)**

Röntgendiffraktometer mit hoher zeitlicher Auflösung

Die Erfindung betrifft ein Röntgendiffraktometer mit einem ortsempfindlichen Detektor, wie es im Oberbegriff des Patentanspruchs 1 angegeben ist.

Derartige Röntgendiffraktometer sind beispielsweise aus der DE-AS 26 37 945 zur schnellen Messung über einen großen Winkelbereich bekannt. Dabei werden die Möglichkeiten des ortsempfindlichen Detektors, mehrere Winkelgrade des Meßkreises simultan zu erfassen, ohne dabei Auflösung zu verschenken, auf einfache Weise vorteilhaft für die Röntgendiffraktometrie ausgenutzt. Auf diese Weise konnte bereits die Meßzeit auf etwa 1/100 der Meßzeit herkömmlicher Systeme, d.h. Systeme ohne ortsempfindlichen Detektor, reduziert werden.

Zur Erfassung eines größeren Winkelbereiches wird bei dem bekannten Röntgendiffraktometer der Detektor durch einen Schrittmotor bewegt. In einem Zähler werden die Motorschritte aufsummiert. Das Zählergebnis stellt — gegebenenfalls nach einer Untersetzung — den digitalen Wert für den Detektorort dar ; genau genommen für die Mitte des Detektors. Ein Zeit-Digital-Wandler liefert für jedes im Detektor registrierte Röntgenquant die Abweichung von der Detektormitte. Die jeweilige Summe dieser beiden Werte entspricht der genauen Winkellage des registrierten Röntgenquants und bestimmt die Adresse in einem Vielkanal-Analysator, an der dieses Ereignis abgespeichert wird.

Bei vielen Untersuchungen genügt es jedoch auch, nur einen begrenzten Winkelbereich zu betrachten. Solche Anwendungen können z.B. Phasenumwandlungen unter Druck oder hohen und tiefen Temperaturen, Domänenklapp-Prozesse, Festkörperreaktionen, Bildungsprozesse, Ausdehnungsmessungen, Spannungsmessungen und dergl. sein. Dabei ist insbesondere die Dynamik derartiger Prozesse in Abhängigkeit von unterschiedlichsten Meßparametern interessant.

Der vorliegenden Erfindung liegt daher die Aufgabe zugrunde, bei einem Röntgendiffraktometer, wie es im Oberbegriff des Patentanspruchs 1 angegeben ist, neben der schnellen Untersuchung großer Winkelbereiche auf einfache Art auch die Aufnahme der Abhängigkeit der aufgenommenen Beugungsprofile von sich schnell ändernden Meßparametern zu ermöglichen. Weiterhin besteht die Aufgabe, die wegen der im zeitlichen Grenzbereich arbeitenden elektronischen Bauteile möglicherweise hervorgerufenen Fehler, beispielsweise in der Zuordnung der Beugungsprofile zu den Adressen des Vielkanal-Analysators, zu beseitigen oder zumindest zu verringern.

Diese Aufgaben werden erfindungsgemäß dadurch gelöst, daß ein digitaler Bereichsumschalter vorgesehen ist, dessen Ausgang mit einem weiteren Eingang des digitalen Addierers verbunden ist. Allein durch dieses einzige zusätzliche digitale Bauteil wird auf einfachste Weise der Anwendungsbereich des Röntgendiffraktometers erheblich vergrößert. So wird es beispielsweise möglich, die aufgenommenen Beugungsprofile nacheinander auf beliebige Bereiche des Vielkanal-Analysators umzuschalten und dadurch mit hoher zeitlicher Auflösung zu registrieren. Jedem Bereich ist dabei ein anderer Meßparameter zugeordnet. Bei periodischen Prozessen sind damit zeitliche Auflösungen von ca. 10 µs erreichbar. Bei einmaligen Vorgängen sind wegen der notwendigen Zählstatistik Meßzeiten in der Größenordnung von 0,1 sec erforderlich.

Die Untersuchung derartiger dynamischer Prozesse kann bei feststehendem Röntgendiffraktometer vorgenommen werden, indem das Ausgangssignal des Bereichsumschalters Binäradressen darstellt, die jeweils einen Bereich des Vielkanal-Analysators festlegen und gleichzeitig einem Meßparameter entsprechen. Z.B. kann man sich bei einem Vielkanal-Analysator mit $2^{12} = 4\,096$ Kanälen diese in $2^5 = 32$ Bereiche zu je $2^7 = 128$ Kanäle zerlegt denken. Die 32 Bereiche werden zeitlich nacheinander angesteuert. Zu diesem Zweck werden auf den weiteren Addiereingang vom Bereichsumschalter kommend 12 Bit-Binäradressen gelegt, bei denen die niedrigsten 7 Bit auf low gesetzt sind und die Bits 8 bis 12 die Bereichsumschaltung vornehmen.

In Weiterbildung der Erfindung ist vorgesehen, daß der Bereichsumschalter durch einen Meßparameter angesteuert ist. Man kann dafür z.B. physikalische Größen wie Zeit, Druck, Temperatur, elektrische oder magnetische Felder verwenden, die dann entsprechend digitalisiert sein müssen. Für das angeführte Beispiel müßte der für den Zustand einer Probe charakteristische Meßparameter in ein 5 Bit-Wort umgewandelt werden.

In entsprechender Weise lassen sich die beispielsweise 4 096 Kanäle des Vielkanal-Analysators in beliebige Potenzen von 2 als Produkt aus Bereich mal Zahl der Bereiche aufteilen.

Eine zusätzliche Steigerung der Meßgenauigkeit läßt sich vorteilhaft erreichen, wenn zusätzlich zu der zeitlichen Bereichsfortschaltung der ortsempfindliche Detektor um einen kleinen Winkelbereich um seine feste Ruhelage herum bewegt wird. Etwaige durch die Auswertelektronik verursachte Fehler werden auf diese Art und Weise herausgemittelt. Bei einem derartigen kombinierten Meßverfahren, bei dem einerseits die Bereichsfortschaltung in Abhängigkeit von bestimmten Meßparametern vorgenommen wird und gleichzeitig der betrachtete Winkelbereich unabhängig vom Meßparameter periodisch verändert wird, sieht eine vorteilhafte Ausführungsform des Röntgendiffraktometers mit einem digitalen Addierer mit n-Bit vor, daß bei dem Ausgangssignal des Bereichsumschalters, das die binäre Bereichsadresse darstellt, die niederwertigsten m-Bit auf low gesetzt und die hochwertigsten k-Bit für die Bereichsumschaltung verfügbar sind, wobei mit m + k < n ist. Dadurch wird erreicht, daß zwischen den einzelnen durch die Meßparameter festgelegten Bereichen Lücken frei bleiben. Diese Lücken sollen in Abhängigkeit von der Größe der zusätzlichen periodischen Auslenkung des Detektors so groß gewählt werden, daß keine Überlappungen zwischen einzelnen Bereichen auftreten.

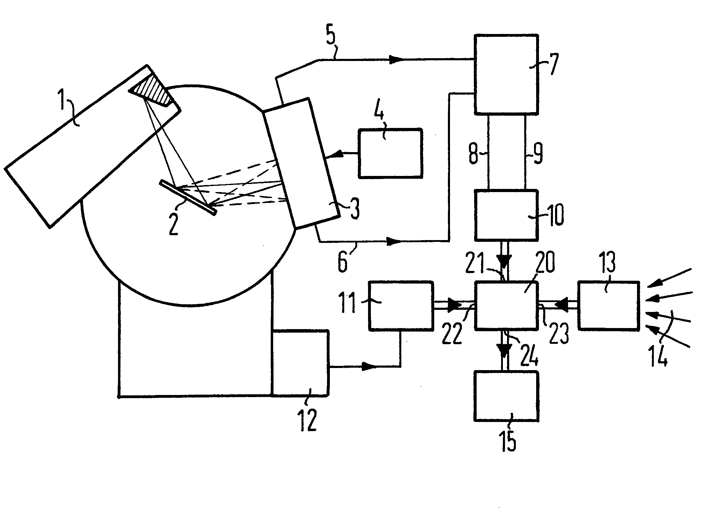

Aus der Zeitschrift « J. Appl. Cryst. » 1978, Bd. 11, Seiten 449-454 ist zwar bereits ein Röntgendiffraktometer zur Untersuchung dynamischer Prozesse, beispielsweise der Muskelkontraktion, bekannt. Der elektronische Aufbau, wie er beispielsweise in der Fig. 4 auf Seite 452 dieser Druckschrift angegeben ist, ist jedoch wesentlich aufwendiger als der erfindungsgemäße. Anstelle eines einfachen Addierers ist eine Steuereinheit für eine Mehrbereichsumschaltung und ein zusätzliches Interface zur Angleichung an den Vielkanal-Analysator erforderlich.

Insbesondere ist es jedoch mit dem aus dieser Druckschrift bekannten Röntgendiffraktometer nicht möglich, zwischen einer Kanalfortschaltung des Vielkanal-Analysators synchron mit der Bewegung des Diffraktometers und einer Bereichsfortschaltung in Abhängigkeit von einem Meßparameter umzuschalten. Ebenso wenig ist eine sinnvolle und die Meßgenauigkeit erhöhende Kombination dieser beiden Anwendungsmöglichkeiten gegeben.

Im folgenden wird anhand einer Figur ein Ausführungsbeispiel der Erfindung näher beschrieben und erläutert. Dabei zeigt die einzige Figur schematisch ein Röntgendiffraktometer mit ortsempfindlichem Detektor und dem Blockschaltbild für die Ansteuerung des Vielkanal-Analysators.

Die von einer Quelle 1 ausgehende monochromatische Röntgenstrahlung trifft auf eine Probe 2. Die von dieser Probe 2 ausgehende Röntgenstrahlung wird von einem ortsempfindlichen Detektor 3 registriert, der mit einer Hochspannungsversorgung 4 versehen ist. Über zwei Leitungen 5 und 6 werden die durch jedes auftreffende Röntgenquant ausgelösten Detektorsignale einer Auswertelektronik 7 zur Signalerkennung und -formung zugeführt. Die Ausgangssignale der Auswertelektronik 7 auf den Leitungen 8 und 9 geben den Start- und Stopzeitpunkt für einen nachfolgenden Zeit-Digital-Wandler 10 an. Die Zeitdifferenz zwischen Start- und Stopzeitpunkt ist ein Maß für den Ort des registrierten Röntgenquants auf dem Detektor 3.

Der Ausgang des Zeit-Digital-Wandlers 10 ist mit einem Eingang 21 eines binären Addiergliedes 20 verbunden. Ein weiterer Eingang 22 dieses Addiergliedes 20 ist mit dem Ausgang eines Motorschrittzählers 11 verbunden, der die Schritte eines Schrittmotors 12 vorwärts und rückwärts aufsummiert. Der Schrittmotor 12 dient zur Bewegung des gesamten Detektors 3. Der Ausgangswert des Motorschrittzählers 11 gibt in digitaler Form den Ort der Mitte des ortsempfindlichen Detektors 3 an. Das Addierglied 20 weist einen zusätzlichen Eingang 23 auf, der mit dem Ausgang eines digitalen Bereichsumschalters 13 verbunden ist. Dieser digitale Bereichsumschalter 13 kann — wie durch die Pfeile 14 angedeutet — durch unterschiedlichste Meßparameter wie Zeit, Temperatur, Druck oder elektrische Meßgrößen angesteuert werden. Der Ausgang 24 des Addiergliedes 20 dient zur Adressenansteuerung eines Vielkanal-Analysators 15.

Mit Hilfe dieses einfachen Addiergliedes 20 mit seinen drei Eingängen eignet sich das Röntgendiffraktometer für unterschiedlichste Anwendungsformen. Durch die Addition der digitalen Signale des Motorschrittzählers 11 und des Zeit-Digital-Wandlers 10 erhält man für jedes registrierte Röntgenquant die genaue Winkellage. Bei einer quasi kontinuierlichen Drehung des Detektors 3 mit Hilfe des Schrittmotors 12 ist es somit möglich, einen großen Winkelbereich schnell zu erfassen.

Sollen andererseits dynamische Vorgänge an einer Probe untersucht werden, und reicht daür ein kleiner Winkelbereich aus, so kann bei feststehendem Detektor 3 über den von einem Meßparameter angesteuerten Bereichumschalter 13 erreicht werden, daß die aufgenommenen Beugungsprofile nacheinander auf unterschiedliche Bereiche des Vielkanal-Analysators 15 umgeschaltet werden. Jedem dieser Bereiche ist dabei ein anderer Meßparameter zugeordnet. Auf diese Weise ist es möglich, dynamische Prozesse in der Probe mit hoher zeitlicher Auflösung zu untersuchen.

Ein weiteres Anwendungsgebiet ergibt sich dann, wenn die dynamischen Prozesse nicht zu schnell ablaufen. In diesem Fall kann der erfaßte Winkelbereich, der bei feststehendem Detektor 3 durch den Winkelbereich des Detektors 3 vorgegeben ist, einfach und vorteilhaft dadurch vergrößert werden, daß der Detektor 3 beispielsweise mit Hilfe des Schrittmotors 12 periodisch um eine Ruhelage bewegt wird. Durch die Addition der Digitalsignale an den Eingängen 21 bis 23 des Addiergliedes 20 ist dabei wiederum sichergestellt, daß jedes auf den Detektor 3 auftreffende Röntgenquant zum einen je nach dem Meßparameter dem entsprechenden Bereich des Vielkanal-Analysators 15 zugeordnet und zum anderen innerhalb dieses Bereiches an der richtigen Adresse abgespeichert wird.

**Ansprüche**

1. Röntgendiffraktometer mit einem ortsempfindlichen Detektor (3), der durch einen Vorschubantrieb quasi kontinuierlich auf einem vorbestimmten Weg um eine Probe (2) bewegbar ist und dessen durch ein Röntgenquant ausgelöste Ausgangssignale in einer Auswertelektronik (7) in eine dem Ort des Röntgenquants im Detektor entsprechende Zeitdauer umgewandelt werden, einem an die Auswertelektronik (7) anschließenden Zeit-Digital-Wandler (10), einem digitalen Addierer (20), dessen einer Eingang (21) mit dem Ausgang des Zeit-Digital-Wandlers (10) verbunden ist und dessen zweiter Eingang (22) mit einem dem Ort des Detektors entsprechenden Digitalwert beaufschlagt ist, sowie einem durch den Addierer angesteuerten Vielkanal-Analysator (15), dadurch gekennzeichnet, daß ein digitaler Bereichsumschalter (13) vorgesehen ist, dessen Ausgang mit einem weiteren Eingang (23) des digitalen Addierers (20) verbunden ist.

2. Röntgendiffraktometer nach Anspruch 1, dadurch gekennzeichnet, daß der Bereichsumschalter (13) durch einen Meßparameter ansteuerbar ist.

3. Röntgendiffraktometer nach Anspruch 1 oder 2, mit einem digitalen Addierer mit n-Bit, dadurch gekennzeichnet, daß bei dem Ausgangssignal des Bereichsumschalters (13), das die binäre Bereichsadresse darstellt, die niederwertigsten m-Bit auf « low » gesezt und die hochwertigsten k-Bit für die Bereichsumschaltung verfügbar sind, wobei m + k kleiner oder gleich n ist.

## Claims

1. An x-ray diffractometer comprising a location-sensitive detector (3) which can be moved by a feed drive quasi-continuously over a predetermined path around a specimen (2), and whose output signals triggered by an x-ray quantum are converted in an electronic analysis unit (7) into a time period which corresponds to the location of the z-ray quantum in the detector, with a time-digital converter (10) which adjoins the electronic analysis unit (7), with a digital adder (20) whose first input (21) is connected to the output of the time- digital converter (10) and whose second input (22) is supplied with a digital value corresponding to the location of the detector, and with a multi-channel analyser (15) which is driven by the adder, characterised in that a digital zone change-over switch (13) is provided whose output is connected to a further input (23) of the digital adder (20).

2. An x-ray diffractometer as claimed in claim 1, characterised in that the zone change-over switch (13) can be driven by a measuring parameter.

3. An x-ray diffractometer as claimed in claim 1 or 2, comprising a digital adder containing n bits, characterised in that in the output signal of the zone change-over switch (13), which signal represents the binary zone address, the lowest value m-bits are set at « low » and the highest value k-bits are available for the zone switch-over, where m + k is smaller than or equal to n.

## Revendications

1. Diffractomètre à rayons X comportant un détecteur (3) à sensibilité locale, susceptible d'être déplacé, par un dispositif d'avance, de façon quasi-continue sur une course prédéterminée autour d'un échantillon (2) et dont les signaux de sortie, déclenchés par un quantum de rayons X, sont transformés dans un dispositif électronique d'évaluation (7) en une durée qui correspond à l'emplacement du quantum de rayons X dans le détecteur, un transducteur temps-numérique (10) qui fait suite au dispositif électronique d'évaluation (7), un additionneur numérique (20) dont l'entrée (21) est reliée à la sortie du transducteur temps-numérique (10) et dont la seconde entrée (22) reçoit une valeur numérique qui correspond audit emplacement du détecteur, ainsi qu'un analyseur multi-canaux (15) commandé par l'additionneur, caractérisé par le fait qu'il est prévu un commutateur de zones (13) numérique dont la sortie est reliée à une autre entrée (23) de l'additionneur numérique (22).

2. Diffractomètre à rayons X selon la revendication 1, caractérisé par le fait que ledit commutateur de zones (13) est susceptible d'être commandé par un paramètre de mesure.

3. Diffractomètre à rayons X selon la revendication 1 ou 2, du type à additionneur numérique à n bits, caractérisé par le fait que dans le signal de sortie du commutateur de zones (13), qui représente l'adresse binaire de la zone, les m bits de poids le plus bas sont placés au niveau « low », et les k bits de poids le plus élevé sont disponibles pour la commutation de zone, m + k étant inférieur ou égal à n.